(19) Europäisches Patentamt / European Patent Office / Office européen des brevets

(11) **EP 2 900 481 B1**

(12) **FASCICULE DE BREVET EUROPEEN**

(45) Date de publication et mention de la délivrance du brevet:
**10.01.2018 Bulletin 2018/02**

(21) Numéro de dépôt: **13779525.8**

(22) Date de dépôt: **27.09.2013**

(51) Int Cl.:
*B42D 15/00* (2006.01)  *G02B 5/18* (2006.01)
*G07D 7/00* (2016.01)  *G06K 19/16* (2006.01)
*B42D 25/29* (2014.01)  *B42D 25/328* (2014.01)
*B42D 25/355* (2014.01)

(86) Numéro de dépôt international:
**PCT/EP2013/070170**

(87) Numéro de publication internationale:
**WO 2014/049108 (03.04.2014 Gazette 2014/14)**

(54) **COMPOSANT OPTIQUE DE SECURITE A EFFET REFLECTIF, FABRICATION D'UN TEL COMPOSANT ET DOCUMENT SECURISÉ EQUIPÉ D'UN TEL COMPOSANT**

OPTISCHE SICHERHEITSKOMPONENTE MIT REFLEKTIERENDER WIRKUNG, HERSTELLUNG EINER SOLCHEN KOMPONENTE UND SICHERES DOKUMENT MIT EINER SOLCHEN KOMPONENTE

OPTICAL SECURITY COMPONENT WITH A REFLECTIVE EFFECT, PRODUCTION OF SUCH A COMPONENT AND SECURE DOCUMENT PROVIDED WITH SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2012 FR 1259230**

(43) Date de publication de la demande:
**05.08.2015 Bulletin 2015/32**

(73) Titulaire: **SURYS**
**77607 Marne la Vallee Cedex 3 (FR)**

(72) Inventeur: **SOUPARIS, Hugues**
**F-75012 Paris (FR)**

(74) Mandataire: **Osha Liang**
**2, rue de la Paix**
**75002 Paris (FR)**

(56) Documents cités:
**EP-A2- 2 289 707   WO-A1-2008/095698**
**WO-A2-03/085425   WO-A2-2004/032257**
**JP-A- 2009 134 094**

**Description**

**DOMAINE DE L'INVENTION**

La présente invention concerne le domaine du marquage de sécurité. Plus particulièrement, elle se rapporte à un composant optique de sécurité à effet réflectif pour vérifier l'authenticité d'un document, et plus particulièrement l'authenticité des documents fiduciaires tels que les billets de banque.

**ETAT DE L'ART**

Les fils de sécurité constituent un élément de sécurité fiable et efficace pour la protection des billets de banque contre la contrefaçon. Intégrés dans le papier pendant la fabrication du billet de banque, ils forment un fil fenêtré visible à la surface du papier à intervalles réguliers. Du fait de leur technique de fabrication complexe, ils offrent un niveau élevé de protection contre la contrefaçon. Les fils de sécurité peuvent atteindre une largeur de 5 mm et possèdent des propriétés multifonctions. Notamment, ils peuvent contenir des informations identifiables par tous, telles qu'un motif, des dessins, des caractères alphanumériques ou des signes répétitifs. Ils peuvent aussi comprendre des éléments optiques de sécurité pour l'authentification du billet, produisant par exemple des effets holographiques Ces éléments optiques de sécurité doivent être tels qu'ils peuvent supporter les contraintes de fabrication d'un billet de banque, notamment les contraintes de pression ou de température liées aux phases de séchage ou d'impression du billet.

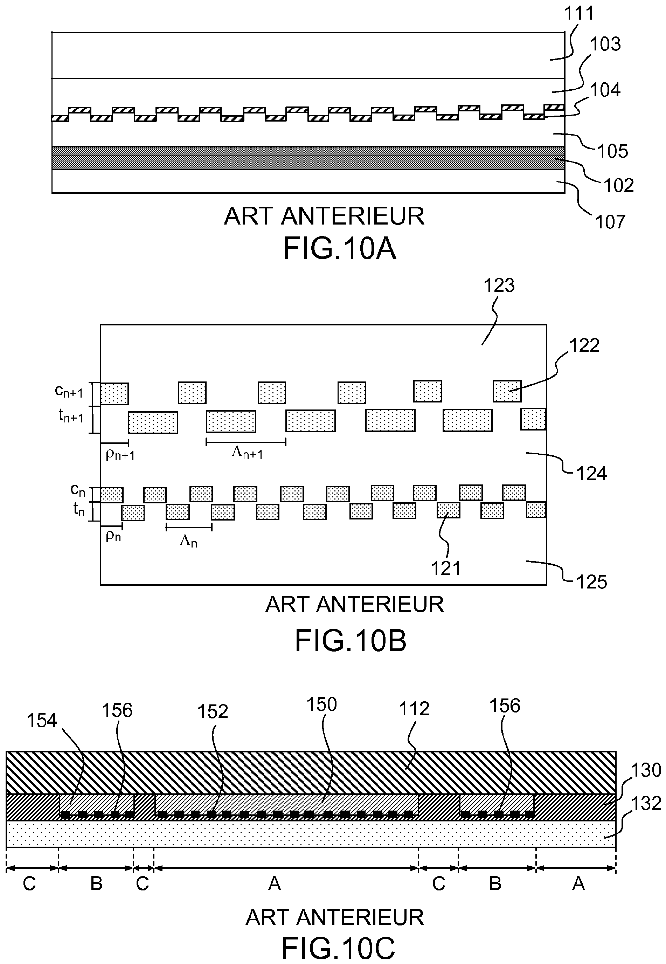

Le brevet FR 2 838 202 délivré au nom de la déposante décrit un composant optique de sécurité compatible avec la réalisation de fils de sécurité et observable en réflexion directe. Un tel composant est décrit sur la figure 10A. Il comprend une couche en matériau diélectrique transparent à haut indice de réfraction (104) encapsulée entre deux couches de bas indice (103, 105), et structurée pour former un réseau sub-longueur d'onde. Un tel composant, appelé DID selon l'abréviation de l'expression anglo-saxonne « Diffractive Identification Device », se comporte comme un guide d'onde structuré permettant d'exciter des résonances de modes guidés à des longueurs d'onde différentes en fonction de la polarisation, de l'angle d'incidence et de l'azimut. Le principe d'un tel effet est également décrit dans la demande de brevet publiée FR 2509873. En réflexion directe (diffraction à l'ordre 0), un tel composant se comporte ainsi comme un filtre soustractif en longueurs d'onde, ou filtre passe-bande, formant un miroir coloré dont la couleur varie avec la direction d'observation. Afin d'augmenter la visibilité de l'effet lors des modifications d'orientation du composant, il est divulgué dans le brevet FR 2 838 202 l'agencement d'une couche de contraste colorée 102 présentant des zones transparentes et des zones colorées, les zones colorées pouvant prendre des formes identifiables.

La demande de brevet WO 2006/038120 décrit également un composant optique de sécurité, dont un exemple est illustré sur la figure 10B. Le composant décrit comprend deux couches 121, 122 à fort indice de réfraction, encapsulées chacune entre des couches à faible indice de réfaction (respectivement 123, 124 et 124, 125) et structurées pour former deux réseaux diffractifs observables à l'ordre 0 de type DID. L'agencement de deux réseaux superposés permet de renforcer les effets de couleur variables visibles par rotation du composant. L'application pour un fil de sécurité comportant des informations identifiables n'est cependant pas décrite.

La demande de brevet WO 2011/104551 décrit également un composant optique de sécurité, dont un exemple est illustré sur la figure 10C. Le composant décrit ici comprend des éléments colorés transparents (150, 154) par exemple en résine réticulable sous UV à la surface desquels sont formés des microstructures 156 aptes à générer des effets optiques variables. Une couche réflective 130 s'étend sur l'ensemble des éléments portant les microstructures et dans des régions décalées latéralement. Le fait d'utiliser des éléments colorés discontinus permet de pouvoir plus facilement lors du procédé de fabrication couper entre les différents éléments pour former une multiplicité de composants. Par ailleurs, l'utilisation pour un même composant de résines de différentes couleurs permet de produire des effets colorés différents. Le composant décrit est applicable aux fils de sécurité, mais la recherche d'un plus grand contraste entre les différentes régions n'est pas considérée.

Les demandes de brevets WO 2004/032257 et WO 03/082598 décrivent des composants optiques de sécurité utilisant des filtres diffractifs fonctionnant à l'ordre zéro. La présente invention présente un composant optique de sécurité pouvant être contrôlé en réflexion à l'ordre zéro et à l'oeil nu par un observateur, ledit composant permettant par rapport aux composants décrits dans l'art antérieur, un contraste accru des informations identifiables par un observateur, notamment les information portées par les fils de sécurité des billets de banque. L'invention concerne également un procédé de réalisation d'un tel composant.

**RESUME DE L'INVENTION**

Selon un premier aspect, l'invention concerne le composant optique de la revendication 1.

La déposante a montré qu'un composant optique de sécurité ainsi structuré permettait de faire apparaître les informations identifiables du composant avec un effet coloré très contrasté par rapport aux zones périphériques.

Selon une variante, les éléments d'identification sont formés par impression et moulage d'un matériau réticulable sous UV, permettant d'avoir une adéquation parfaite entre l'information identifiable et la double structure de guide d'onde obtenue par superposition de couches structurées.

Selon une variante, au moins une première partie des éléments d'identification sont formés par impression d'un matériau absorbant d'une première couleur et au moins une deuxième partie des éléments d'identification sont formés par impression d'un matériau absorbant d'une deuxième couleur, permettant d'enrichir les effets visuels sur le composant, et de faciliter ainsi l'authentification.

Selon une variante, le composant comprend en outre une couche réflective agencée entre la couche support et la deuxième couche de haut indice de réfraction, permettant notamment de rendre invisibles les éléments d'identifications sur la face opposée à la face observation.

Selon une variante, la couche réflective est discontinue, en contact avec la couche support et les seuls éléments d'identification.

Selon une variante, la couche réflective est continue, en contact avec l'ensemble de la couche support. En périphérie des éléments d'identification, la couche réflective supprime l'effet de filtre soustractif, augmentant encore la différence de contraste entre les éléments d'identification et les zones périphériques.

Selon une variante, le composant comprend en outre une couche de protection transparente, du côté de la face d'observation, notamment pour l'application du composant à la réalisation de fils de sécurité pour les billets de banque.

Selon un second aspect, l'invention concerne une méthode de fabrication d'un composant optique de sécurité selon le premier aspect, comprenant :

- la fabrication d'un premier film comprenant la formation sur une première couche support transparente d'éléments d'identification, obtenus par impression d'un matériau absorbant dans une partie au moins du spectre visible, de bas indice de réfraction, pour reproduire des informations identifiables, la structuration d'une partie au moins des éléments d'identification pour former le premier réseau, et le dépôt sur les éléments d'identification et la première couche support d'une couche de haut indice de réfraction,

- la fabrication d'un second film comprenant le dépôt sur une seconde couche support transparente d'une couche transparente de bas indice de réfraction, la structuration de la couche de bas indice de réfraction sur l'ensemble de sa surface pour former le second réseau et le dépôt sur ladite couche de bas indice de réfraction structurée d'une couche de haut indice de réfraction,

- le dépôt sur l'un et/ou l'autre des deux films d'une couche d'interface transparente, de bas indice de réfraction, en contact avec la couche de haut indice de réfraction,

- l'assemblage des deux films au moyen de la ou desdites couche(s) d'interface.

Selon une variante, la méthode de fabrication d'un composant optique de sécurité selon le premier aspect comprend :

- l'impression sur une première couche support transparente desdits éléments d'identification et la structuration d'une partie au moins desdits éléments pour former le premier réseau,

- le dépôt sur les éléments d'identification et la première couche support d'une couche de haut indice de réfraction,

- le dépôt d'une couche de bas indice de réfraction, transparente, et la structuration de ladite couche de bas indice de réfraction sur l'ensemble de sa surface pour former le second réseau,

- le dépôt sur la couche de bas indice de réfraction structurée d'une couche de haut indice de réfraction,

- le dépôt dur la couche de haut indice de réfraction d'une couche de bas indice de réfraction.

Selon une variante, la méthode de fabrication peut comprendre le dépôt d'une couche réflective sur la première couche support, préalablement à l'impression des éléments d'identification.

Selon une variante, la méthode de fabrication comprend en outre le retrait sélectif de la couche réflective pour former une couche réflective discontinue, les éléments d'identification formant un masque de démétallisation pour limiter le contact de la couche réflective aux seuls éléments d'identification.

## BREVE DESCRIPTION DES FIGURES

D'autres caractéristiques et avantages de l'invention apparaîtront à la lecture de la description qui suit, illustrée par les figures sur lesquelles :

La figure 1, une vue partielle en coupe d'un composant optique de sécurité selon l'invention selon une variante ;
La figure 2, un exemple de fil de sécurité intégrant un composant optique de sécurité selon la variante de la figure 1 ;
La figure 3, une vue partielle en coupe d'un composant optique de sécurité selon l'invention selon une autre variante ;
La figure 4, une vue partielle en coupe d'un composant optique de sécurité selon l'invention selon une autre variante ;
La figure 5, une vue partielle en coupe d'un composant optique de sécurité selon l'invention selon une autre variante ;
La figure 6, un exemple de fil de sécurité intégrant un composant optique de sécurité selon la variante de la figure 5 ;
Les figures 7A à 7G, des schémas illustrant un exemple de réalisation d'un composant optique de sécurité selon l'invention ;
Les figures 8A à 8E une variante de réalisation d'un composant optique de sécurité selon l'invention ;
Les figures 9A, 9B, des vues recto et verso d'un exemple de billet de banque intégrant un fil de sécurité formé selon un exemple de l'invention ;
Les figures 10A à 10C (déjà décrites) des composants optiques de sécurité selon l'art antérieur.

Sur les figures, les éléments identiques sont repérés par les mêmes références.

## DESCRIPTION DETAILLEE

Les figures sont représentées à fin d'illustration et ne sont pas représentatives ni des échelles, ni des formes des composants réels.

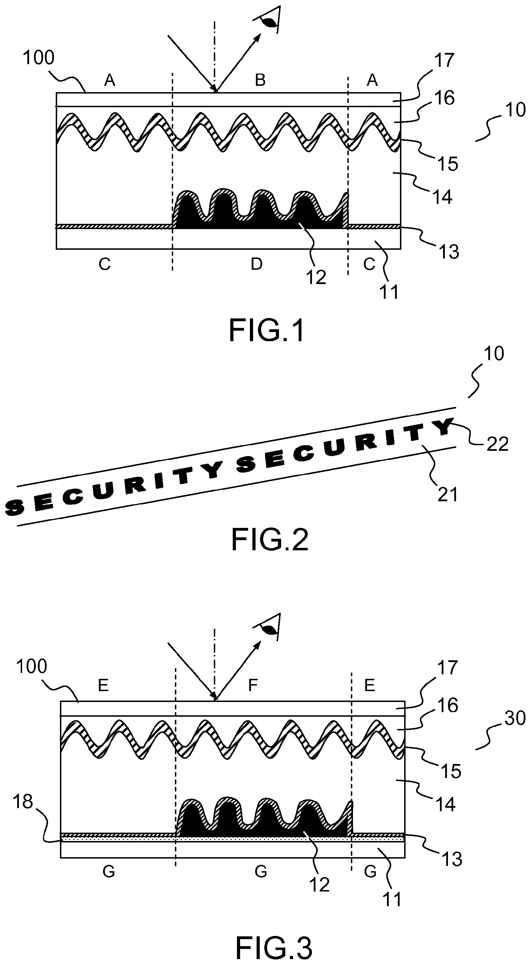

La figure 1 représente un premier exemple d'un composant optique de sécurité 10 selon une vue de coupe et la figure 2 un exemple d'un tel composant vu de dessus. Le composant 10 est destiné à être observé dans le visible selon une face d'observation 100 et comprend des informations identifiables, par exemple des motifs, signes répétitifs, caractères alphanumériques (par exemple les lettres 22 visibles sur la figure 2). Il comprend successivement et en partant du côté opposé à la face d'observation, une première couche support 11, des éléments d'identification 12 obtenus par impression d'un matériau diélectrique, opaque, de bas indice de réfraction sur la couche support, une deuxième couche 13, en matériau diélectrique de haut indice de réfraction, une troisième couche 14 en matériau diélectrique à faible indice de réfraction, transparente dans la bande spectrale d'observation du composant, une quatrième couche 15 en matériau diélectrique de haut indice de réfraction, une cinquième couche 16 en matériau diélectrique à faible indice de réfraction, transparente dans la bande spectrale d'observation du composant.

Dans la suite de la description, on appelle matériaux de bas indice de réfraction des matériaux dont les indices de réfraction sont inférieurs aux indices de réfraction des matériaux appelés matériaux à haut indice de réfraction. Selon une variante, les indices de réfraction des matériaux dits haut indice sont égaux ou sensiblement égaux, compris par exemple entre 1,8 et 2,9, avantageusement entre 2,0 et 2,4. Selon une variante, les indices de réfraction des matériaux dits bas indice sont égaux ou sensiblement égaux, compris par exemple entre 1,3 et 1,8, avantageusement entre 1,4 et 1,7.

Les éléments d'identification sont imprimés sur la couche support de telle sorte à reproduire au moins une partie des informations identifiables du composant. Ils sont obtenus par impression d'un matériau diélectrique, bas indice, opaque, c'est-à-dire absorbant dans tout ou partie du spectre visible et notamment dans la partie du spectre non réfléchi par les structures du composant formant guides d'onde. Avantageusement, l'absorption est supérieure à 50%, de préférence supérieure à 75% et plus spécifiquement au moins égale à 85%. Avantageusement, le matériau pour former les éléments d'identification est un matériau réticulable sous UV, par exemple un vernis réticulable coloré. Ainsi des vernis réticulables prêts à l'emploi pourront être utilisés tels que le vernis Actega ® 801 H ou bien la référence X29 de Stensborg® qui devront recevoir un colorant ou un pigment, par exemple un pigment noir, ou bien encore il sera possible d'utiliser une encre noire réticulable aux UV telle que l'encre Sericol® JD 009.

Comme cela apparaît sur la figure 1, au moins une partie des éléments d'identification sont structurés sur la face opposée à la face en vis-à-vis de la couche support, pour former au niveau desdits éléments d'identification un premier réseau diffractant, de période sub longueurs d'onde, typiquement de période comprise entre 100 et 600 nm et plus particulièrement entre 200 et 500 nm. La couche de haut indice 13 recouvre la première couche support 11 et les éléments d'identification 12. Elle est formée par exemple en sulfure de zinc (ZnS) ou en oxyde de titane (TiO$_2$) ou en matériau polymère de haut indice optique, et son épaisseur est comprise typiquement entre 40 et 200 nm. La couche de bas indice 14, par exemple formée d'un vernis réticulable à l'UV, transparent, est en contact avec la couche haut indice 13. L'ensemble ainsi constitué permet d'obtenir au niveau de chaque élément d'identification structuré, à l'ordre zéro, un filtre soustractif en longueur d'onde, par effet de guide d'onde dans la couche de haut indice. Autrement dit, un observateur observant le composant par la face d'observation 100 verra un effet coloré d'une première couleur selon une première orientation et un effet coloré selon une deuxième couleur selon une deuxième orientation. Chaque « première » et « deuxième » couleur correspond à une bande spectrale d'intérêt comprise entre 380 nm et 780 nm, centrée sur une longueur d'onde définie par la période et la profondeur du réseau sub longueur d'onde, l'épaisseur de la couche de haut indice et la différence d'indice entre les couches de haut indice et de bas indice. Typiquement, les longueurs d'onde centrales recherchées sont autour de 500 nm et 630 nm, permettant de générer des couleurs respectivement verte et rouge en réflexion.

Par ailleurs, la troisième couche 14 transparente, de bas indice, est elle-même structurée pour former un deuxième réseau de diffraction sub longueur d'onde, en contact avec la quatrième couche de haut indice 15, avantageusement en même matériau que la deuxième couche de haut indice 13, elle-même en contact avec la couche de bas indice 16, par exemple en vernis d'estampage transparent réticulable à l'UV ou thermoformable. L'ensemble ainsi formé est destiné à former à l'ordre zéro un deuxième filtre soustractif en longueur d'onde mais cette fois ci sur toute la surface du composant et non plus de façon sélective au niveau des éléments d'identification. La période du deuxième réseau de diffraction est identique à celle du premier réseau de diffraction, pour renforcer l'efficacité de l'effet à une longueur d'onde donnée. Dans un exemple non couvert par la présente invention, elle peut être différente de celle du premier réseau de diffraction pour obtenir des effets colorés avec des couleurs composées.

Lors de l'observation par la face 100 d'observation du composant, il sera ainsi possible de distinguer au moins deux types de régions, notées A et B sur la figure 1 et correspondant respectivement aux lettres 22 et aux régions périphériques 21 du composant vu de dessus (figure 2). Dans les régions A, un effet simple de filtre soustractif en couleur est visible, réalisé uniquement en matériaux transparents. Dans les régions B, l'effet sera très contrasté avec la superposition de deux effets de filtres soustractifs en couleur obtenus grâce au premier et au second réseau de diffraction, renforcé par l'opacité du vernis d'estampage 12 formant les éléments d'identification, qui permet d'absorber localement le flux lumineux non transmis pas les structures de guide d'onde, et limite ainsi le flux parasite réfléchi au niveau des éléments d'identification. La superposition parfaite des deux structures de guide d'onde et du vernis opaque au seul endroit des informations identifiables du composant, obtenue par exemple grâce à l'impression et au moulage d'un matériau réticulable sous UV, permet d'obtenir un composant avec des différences de contraste remarquables entre les zones portant de l'information identifiable et les zones périphériques, par rapport aux composants connus de l'art antérieur.

Plus précisément, on peut estimer les différences de contraste entre les régions A et B de la façon suivante. Si l'on suppose que les deux réseaux sub-longueurs d'onde sont sensiblement identiques et présentent une réflexion $R_{struct}$ dans la bande spectrale d'intérêt , et que la troisième couche (14) est suffisamment épaisse pour supprimer les effets d'interférence (typiquement épaisseur supérieure à 1 $\mu$m), on peut estimer la réflexion totale $R_T$ pour un double filtre soustractif dans la bande spectrale d'intérêt par :

$$R_T = R_{struct} + (1 - R_{struct})^2 \sum_{k=0}^{\infty} R_{struct}^{(2k+1)} \qquad (1)$$

Ainsi pour $R_{struct}$ =60% par exemple, on obtient $R_T$ = 75%.

En supposant la réflexion résiduelle inférieure à 20 % sur la longueur d'onde de calcul du contraste, ceci étant dû à la présence d'un vernis absorbant, on peut alors estimer le contraste dans la bande spectrale d'intérêt supérieur à 0.88 dans la région B.

Dans la présente description, on appelle contraste (ou contraste structurel) dans la bande spectrale centrée sur la longueur d'onde d'intérêt $\lambda_0$ le contraste $C(\lambda_0)$ défini par :

$$C(\lambda_0) = \frac{R_{struct} - R_{res}}{R_{struct} + R_{res}}$$

$$(2)$$

Où $R_{struct}$ est la réflexion par la structure dans la bande spectrale d'intérêt (par exemple égale à $R_T$ telle que définie par l'équation (1) dans le cas d'une double structure) et $R_{res}$ est le flux lumineux résiduel diffusé par le composant dans cette même bande spectrale.

Dans la région A, il existe un flux diffusé parasite important du fait de l'absence du vernis coloré. Par ailleurs, la réflexion dans la bande spectrale d'intérêt est seulement de $R_{struct}$ = 60%. Le contraste est donc typiquement de 0.30 dans cette région. On observe donc une différence très importante dans le contraste des éléments identifiables et celui des régions avoisinantes, permettant une excellente visibilité des informations portées par le composant.

5

Les figures 3 à 6 illustrent d'autres variantes d'un composant selon l'invention.

Le composant 30 représenté sur la figure 3 est sensiblement identique au composant 10 représenté sur la figure 1, mais comprend en outre une couche réflective agencée entre la première couche support 11 et la troisième deuxième couche 13, en matériau de haut indice. La couche réflective 18 est par exemple une couche métallique, par exemple en aluminium. La couche 18 peut également être une couche blanche ou d'une couleur proche de celle du papier. Dans l'exemple de la figure 3, elle est continue, en contact avec la couche support 11 sur toute la surface du composant.

Lors de l'observation du composant 30 par la face d'observation 100, l'effet observé dans les régions F correspondant aux régions comprenant les éléments d'identification 12 sera sensiblement le même que l'effet observé dans les régions B du composant 10 (figure 1). En effet, du fait de l'absorption du flux lumineux résiduel par le vernis opaque, la couche réflective 18 aura dans ces régions peu d'effet. Dans les régions notées E et correspondant aux régions périphériques à celles comprenant les éléments d'identification, le contraste des couleurs sera encore diminué, voire nul, la couche réflective supprimant l'effet filtre soustractif en couleurs en réfléchissant l'ensemble du spectre visible. La différence de contraste est donc encore accrue dans un composant de ce type, entre les éléments identifiables et celui des régions avoisinantes.

Par ailleurs, l'observation du composant par la face opposée à la face d'observation laissera apparaître une face uniforme (notée G sur la figure 3) liée à la présence de la couche réflective, typiquement un aspect métallique. Cela peut présenter l'avantage par rapport au composant 10 (figure 1), par exemple dans l'application au fil de sécurité pour billet de banque, de rendre complètement invisibles les informations identifiables sur le verso du billet. Dans le composant 10 (figure 1), un observateur verra sur la face opposée à la face d'observation les informations identifiables apparaître en sombre (région D) tandis que les régions périphériques (régions C) présenteront un effet de filtre soustractif sensiblement similaire à celui visible dans les régions A. Les informations identifiables continueront donc à être perçues, mais sans l'effet de couleur intense et contrasté visible sur le recto du billet.

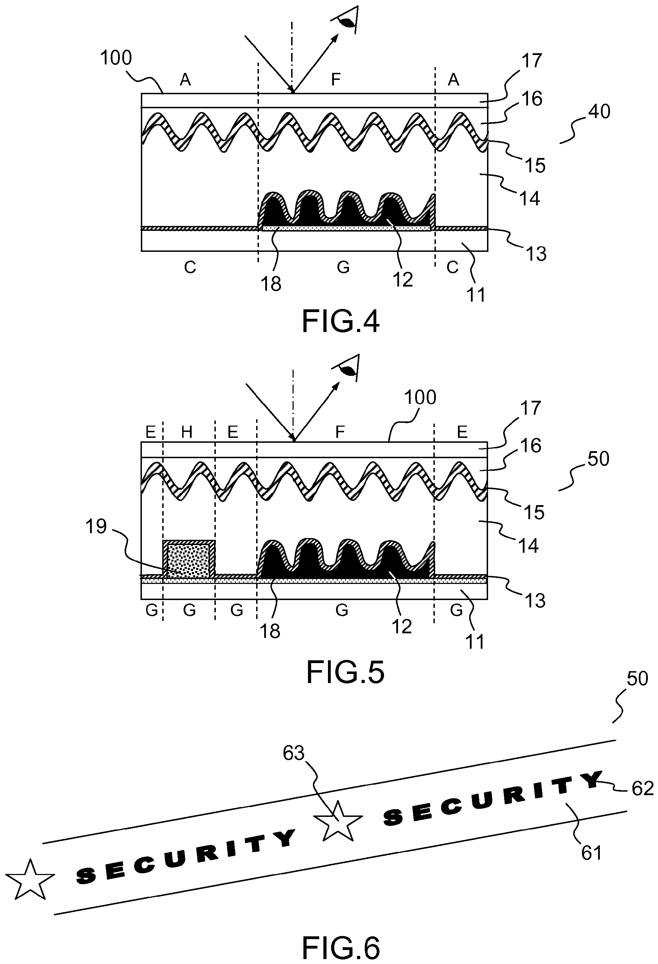

Le composant 40 représenté sur la figure 4 est sensiblement identique au composant 30 représenté sur la figure 3 mais dans cet exemple, la couche réflective 18 est discontinue, limitée aux seuls endroits des éléments d'identification 12. Les 2 faces présentent alors des aspects (effets optiques) encore plus différenciés, permettant un niveau de contrôle supplémentaire.

Les figures 5 et 6 illustrent une autre variante d'un composant selon la présente invention, référencé 50 sur la figure 5.

Selon cette variante, des éléments d'identification de différentes natures sont agencés sur un même composant. Par exemple, le composant 50 comprend des éléments d'identification 12 structurés, comme ils ont été décrits précédemment, et des éléments d'identification non structurés 19. Les éléments d'identification non structurés 19 sont par exemple réalisés en matériau coloré, par exemple un vernis réticulable sous UV comprenant un pigment donné, de telle sorte à présenter dans les régions notées H sur la figure 5 un effet métallique coloré donné, par exemple des étoiles dorées 63 (figure 6) qui contrastent avec des caractères alphanumériques 62 correspondant aux régions F sur la figure 5. Dans les régions E périphériques aux régions F et H, seul un effet de filtre soustractif simple est visible (fond 61 sur la figure 6), ou, comme cela est le cas dans l'exemple de la figure 5, un effet métallique non coloré dû à la présence de la couche réflective 18 qui supprime l'effet de filtre soustractif en longueur d'onde. Alternativement, les éléments d'identification 19 peuvent être également structurés pour former un réseau sub longueur d'onde, mais imprimés avec un matériau présentant un spectre d'absorption différent de celui utilisé pour former les éléments d'identification 12 de telle sorte à former des effets colorés différents. Dans l'exemple de la figure 5, la couche réflective 18 est continue, agencée sur toute la surface du composant entre la couche support 11 et la couche de haut indice 13, permettant de rendre invisibles les effets visuels produits par les éléments d'identification 12 et 19 au verso du billet, lorsque le composant est destiné à un fil de banque, par exemple.

La table 1 ci-dessous récapitule les effets visibles dans les différentes régions des composants illustrés sur les figures 1, 3, 4, 5, en comparant ces effets à ceux obtenus dans les composants de l'art antérieur (« AA ») décrits sur les figures 10A et 10B et repérés dans le tableau par un encadré en trait gras. En face de chaque effet décrit est indiqué un niveau de contraste, noté entre 0 pour le plus faible contraste et 5 pour le plus fort contraste, le contraste étant défini plus haut.

Table 1

| effet | Niveau de contraste | A | B | E | F | AA Fig 10A | AA Fig 10B |
|---|---|---|---|---|---|---|---|
| Métal non coloré | 0.22 | | | X | | | |
| Filtre soustractif simple | 0.30 | X | | | | X | |
| Double filtre soustractif | 0.58 | | | | | | X |

(suite)

| effet | Niveau de contraste | A | B | E | F | AA Fig 10A | AA Fig 10B |
|---|---|---|---|---|---|---|---|
| Filtre soustractif simple et couche de contraste | 0.76 | | | | | X | |
| Double filtre soustractif avec vernis opaque | 0.88 | | X | | X | | |

Comme cela a été décrit précédemment, ce tableau met en évidence des différences de contraste obtenues dans les composants selon la présente description (entre les régions A et B, A et F, E et F, par exemple), beaucoup plus importantes que celles obtenues dans les composants de l'art antérieur.

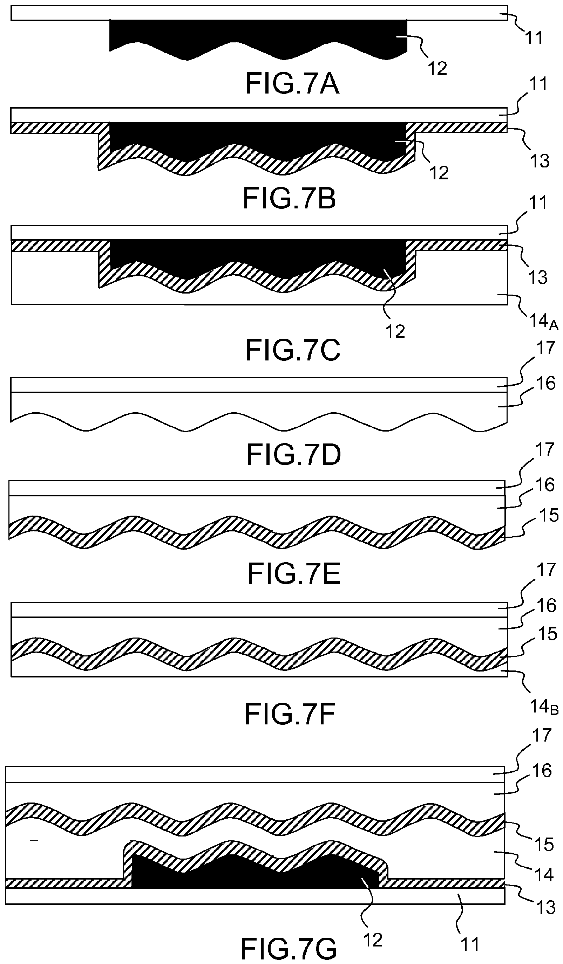

Les figures 7A à 7G illustrent des étapes d'un exemple de méthode de fabrication d'un composant optique de sécurité tel que représenté sur la figure 1.

Selon cette variante, un premier film est fabriqué (figures 7A à 7C), puis un second film est fabriqué (figures 7D à 7F) et les deux films sont assemblés, par exemple par laminage (figure 7G).

Chacun des films peut être réalisé de la façon suivante. Des microstructures optiques destinées à former les premier et second réseaux de diffraction sont par exemple enregistrées par photolithographie ou lithographie par faisceau d'électrons sur un support photosensible ou « photorésist » selon l'expression anglo-saxonne. Une étape de galvanoplastie permet de reporter ces structures optiques dans un matériau résistant par exemple à base de Nickel pour réaliser une matrice ou « master ». Selon une variante, la même matrice peut être utilisée pour former les premier et second réseaux, lorsque les réseaux présentent des pas identiques.

La fabrication du premier film comprend l'impression sur une première couche support 11 se présentant sous la forme d'une bobine des éléments d'identification 12 (figure 7A). La couche support est par exemple un film de 12 $\mu$m à 50 $\mu$m en matériau polymère, par exemple en PET (polyéthylène téréphtalate). Les éléments d'identification sont réalisés par impression d'un matériau réticulable sous UV, opaque, présentant un bas indice de réfraction, par exemple un vernis réticulable coloré. L'impression du vernis réticulable peut être réalisée par impression de type héliogravure, flexographie, ou par jet d'encre, ce qui permet dans ce dernier cas l'impression d'une information variable ou partiellement variable tout au long de la bobine. Les éléments d'identification présentent alors des épaisseurs de 1 à 5 $\mu$m. Un estampage est réalisé à partir de la matrice pour transférer la microstructure sur la face d'une partie au moins des éléments d'identifications. L'estampage est fait par moulage puis réticulation sous UV (« UV casting »). Dans le cas où des éléments d'identification de différentes natures sont agencés sur un même composant (composant 50, figure 5, par exemple), il est possible de procéder à une double impression avec deux vernis colorés réticulables sous UV, l'un étant absorbant au moins dans une bande spectrale complémentaire de la bande spectrale d'absorption (pour former les éléments 12), et l'autre semi-transparent par exemple (pour former les éléments 19). Dans le cas où certains des éléments d'identification sont structurés pour former le premier réseau sub longueur d'onde et d'autres non structurés, tous les éléments peuvent subir un estampage, mais la matrice d'estampage est formée avec des zones présentant des reliefs (structures sub longueurs d'onde) et des zones vierges, de telle sorte que seuls les éléments d'identification destinés à être structurés le soient effectivement. Une couche 13 de haut indice de réfraction est ensuite déposée sur l'ensemble des éléments d'identification et de la couche support (étape 7B), par exemple une couche en sulfure de Zinc (ZnS) d'épaisseur comprise typiquement entre 40 et 200 nm, et plus particulièrement entre 80 et 150 nm, déposée par évaporation sous vide ou par un moyen équivalent. Une couche de fermeture 14$_A$ peut ensuite être appliquée (étape 7C), par exemple par un procédé d'enduction, par exemple une couche adhésive de type colle ou vernis ou une couche réticulable sous UV.

La fabrication du second film comprend l'estampage (figure 7D) d'une couche en matériau diélectrique de bas indice 16, typiquement un vernis d'estampage de quelques microns d'épaisseur porté par un film 17 de 12 $\mu$m à 50 $\mu$m en matériau polymère, par exemple en PET (polyéthylène téréphtalate), réalisé à partir de la matrice pour transférer la microstructure optique destiné à former le deuxième réseau. L'estampage peut être fait par pressage à chaud du matériau diélectrique (« hot embossing ») ou par moulage puis réticulation (« UV casting »). Vient ensuite la dépôt (Figure 7E) sur la couche ainsi embossée d'une couche 15 de haut indice, par exemple en ZnS, par exemple par évaporation sous vide, puis l'application (optionnelle) d'une couche de fermeture 14$_B$ (Figure 7F), par exemple une couche adhésive de type colle ou vernis par un procédé d'enduction ou un vernis réticulable sous UV, par exemple.

Les deux films sont ensuite assemblés (figure 7G) par laminage, avec par exemple dépôt en ligne d'une couche de colle réticulable aux UV ou enduction préalable d'une couche d'adhésif réactivable (couche 14A ou 14B par exemple) du côté de la couche de haut indice, et réactivation de la colle au moment du laminage par des moyens appropriés.

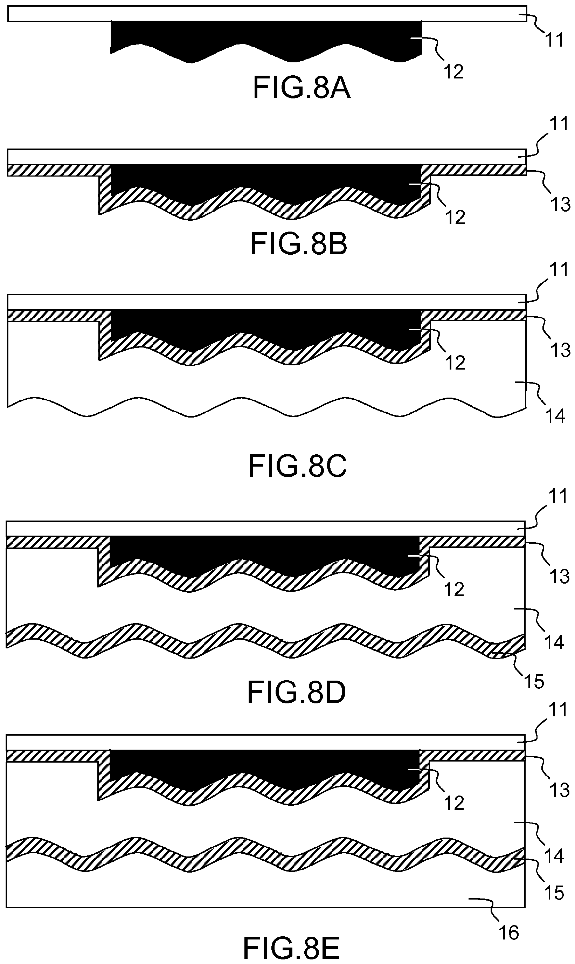

Les figures 8A à 8E décrivent une variante pour la méthode de fabrication d'un composant optique de sécurité selon l'invention, tel que représenté par exemple sur la figure 1.

Selon cette variante, comme dans la formation du premier film (figures 7A à 7B), on procède (figure 8A) à l'impression d'une couche réticulable sous UV d'éléments d'identification 12 en matériau opaque, bas indice, sur une couche support 11, par exemple un film de PET, puis au dépôt (figure 8B) d'une couche de haut indice 13, par exemple une couche en ZnS. L'ensemble est recouvert d'une couche en matériau bas indice 14, transparente, de préférence un matériau réticulable sous UV, suffisamment épaisse pour éliminer toute corrélation entre les premier et second réseaux portés par les éléments d'identification 12 et la couche 14, puis l'estampage de la couche 14 est réalisé (figure 8C), par exemple par moulage puis réticulation pour former le deuxième réseau. La couche 14 présente ainsi typiquement une épaisseur comprise entre 1 et et 50 μm et de préférence entre 1.5 et 25 μm. Une couche en matériau diélectrique haut indice 15 est déposée sur la couche 14 embossée (figure 8D), par exemple une couche de ZnS, puis une couche transparente 16 en matériau diélectrique bas indice est déposée (figure 8E), par exemple un vernis protecteur déposé par exemple par enduction.

Le résultat obtenu à l'issu des méthodes de fabrication décrites respectivement au moyen des figures 7A à 7G ou 8A à 8E est une bobine qu'il faut ensuite découper pour dimensionner des éléments compatibles par exemple avec les dimensions du fil de sécurité. Dans le cas où le composant optique de sécurité est destiné à former un fil de sécurité, il peut être procédé avant la découpe au dépôt d'un film plastique transparent supplémentaire, par exemple un film de PET, sur la couche 16 supportant le deuxième réseau de diffraction, lui assurant la solidité nécessaire pour la tenue lors de la fabrication du billet de banque.

Selon une variante, il peut être procédé avant l'impression des éléments d'identification 12 (figures 7A et 8A) au dépôt d'une couche réflective, par exemple une couche métallique, par exemple en Aluminium. On obtient un composant du type de la figure 3. Selon une variante, après l'impression des éléments d'identification 12, il est procédé à un retrait sélectif de la couche réflective. Les éléments d'identification peuvent alors jouer le rôle de masques de démétallisation de telle sorte que la couche réflective ne subsiste qu'à l'endroit des éléments d'identification, formant alors un composant du type de celui représenté sur la figure 4.

Selon une variante, il est procédé lors de l'étape d'impression des éléments d'identification 12 (figures 7A, 7B), à l'impression d'un premier ensemble d'éléments d'identification en un premier matériau opaque, par exemple un vernis réticulable sous UV, par exemple coloré ou noir et à l'impression d'un deuxième ensemble d'éléments d'identification en un deuxième matériau opaque mais d'une couleur différente, par exemple un vernis réticulable sous UV coloré d'une autre couleur. La couche de haut indice 13 est ensuite déposée, par exemple par évaporation sous vide, sur l'ensemble de la surface, recouvrant les premiers et deuxièmes ensembles d'éléments d'identification et la couche support (ou la couche réflective lorsqu'elle existe). Selon une variante, seul un desdits ensembles des éléments d'identification est structuré pour former le premier réseau.

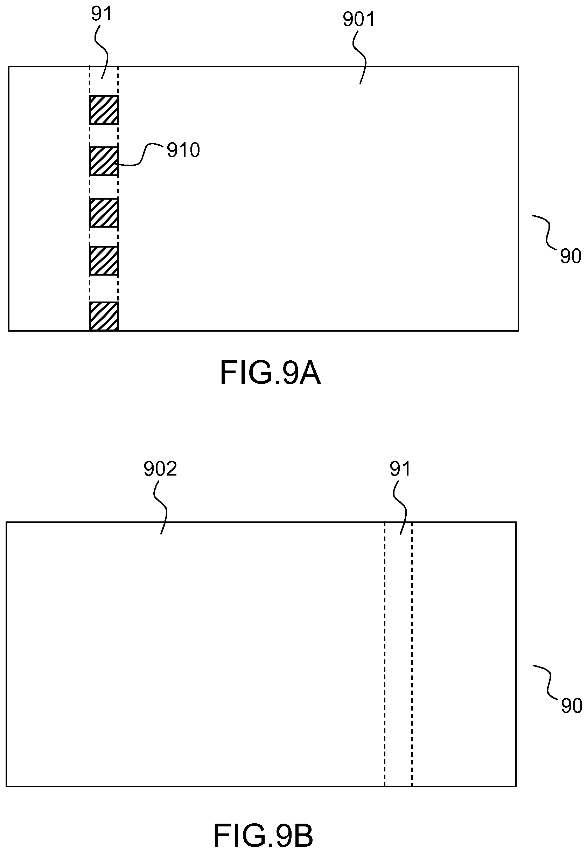

Les figures 9A et 9B représentent un exemple d'application d'un composant optique de sécurité selon la présente description. Dans cet exemple, le composant optique de sécurité est dimensionné sous forme d'un fil de sécurité 91 de 1 mm, 2 mm ou jusqu'à 8 et préférentiellement de 4 à 6 mm de large. Il est intégré à un billet de banque 90. L'intégration dans la pâte à papier se fait selon des moyens connus lors de la fabrication du papier pour billet de banque. La figure 9A représente le recto 901 du billet tandis que la figure 9B en présente le verso 902. Comme cela apparait sur la figure 9A, le processus d'intégration du fil de sécurité dans le papier permet de laisser visibles seulement des zones 910 où le fil est en surface de la feuille de papier. Les informations identifiables portées par les éléments d'identifications décrits précédemment apparaitront en réflexion à l'ordre zéro sur le recto du billet. On observe sur le verso du billet que dans cet exemple, le fil de sécurité est invisible. Il s'agit par exemple d'un fil de sécurité comportant sur la face opposée à la face d'observation une couche réflective recouvrant l'ensemble de la surface, comme par exemple la couche 18 (figures 3 ou 5).

Bien que décrite à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1.   Composant optique de sécurité (10) destiné à être observé dans une bande spectrale d'observation comprise entre 380 nm et 780 nm, en réflexion directe, comportant une face d'observation (100) et des informations identifiables (22), ledit composant comprenant successivement, en partant du côté opposé à la face d'observation :

- une première couche support (11),
- des éléments d'identification (12) obtenus par impression d'un matériau absorbant dans une partie au moins du spectre visible, pour reproduire au moins une partie desdites informations identifiables, au moins une partie des éléments d'identification étant structurés sur une de leurs faces opposée à la face en vis-à-vis de la couche support pour former un premier réseau sub longueur d'onde,
- une deuxième couche (13), recouvrant la première couche support et les éléments d'identification,

- une troisième couche (14), transparente dans la bande spectrale d'observation du composant, en contact avec ladite deuxième couche de telle sorte que le premier réseau formé sur chaque élément d'identification agisse à l'ordre zéro comme un filtre soustractif en longueurs d'onde, ladite troisième couche étant structurée sur l'ensemble de sa face opposée à sa face en contact avec ladite deuxième couche pour former un second réseau sub-longueur d'onde,

- une quatrième couche (15), en contact avec ladite face structurée de la troisième couche (14),

- une cinquième couche (16), transparente dans la bande spectrale d'observation du composant, en contact avec ladite quatrième couche (15), de telle sorte que le second réseau agisse à l'ordre zéro comme un filtre soustractif en longueurs d'onde sur toute la surface du composant,

les éléments d'identification (12), la troisième couche (14) et la cinquième couche (16) ayant des indices de réfraction inférieurs aux indices de réfraction de la deuxième couche (13) et la quatrième couche (15), et

le premier réseau sub-longueur d'onde et le second réseau sub-longueur d'onde comportant une période et une orientation identiques.

2. Composant optique de sécurité selon la revendication 1, dans lequel les éléments d'identification sont formés par impression et moulage d'un matériau réticulable sous UV.

3. Composant optique de sécurité selon l'une quelconque des revendications précédentes, dans lequel au moins une première partie des éléments d'identification sont formés par impression d'un matériau absorbant d'une première couleur et au moins une deuxième partie des éléments d'identification sont formés par impression d'un matériau absorbant d'une deuxième couleur.

4. Composant optique de sécurité selon l'une quelconque des revendications précédentes, comprenant en outre une couche réflective (18) agencée entre la couche support (11) et la deuxième couche (13).

5. Composant optique selon la revendication 4, dans lequel la couche réflective (18) est discontinue, en contact avec la couche support et les seuls éléments d'identification (12).

6. Composant optique selon la revendication 4, dans lequel la couche réflective (18) est continue, en contact avec l'ensemble de la couche support.

7. Composant optique de sécurité selon l'une quelconque des revendications précédentes, comprenant en outre une couche de protection (17) transparente du côté de la face d'observation.

8. Composant optique de sécurité selon la revendication 7, adapté pour la réalisation d'un fil de sécurité.

9. Méthode de fabrication d'un composant optique de sécurité selon l'une quelconque des revendications précédentes, comprenant :

- la fabrication d'un premier film comprenant l'impression sur une première couche support transparente (11) d'éléments d'identification (12), obtenus par impression d'un matériau absorbant dans une partie au moins du spectre visible, pour reproduire des informations identifiables, la structuration d'une partie au moins des éléments d'identification pour former le premier réseau, et le dépôt sur les éléments d'identification et la première couche support d'une deuxième couche (13),

- la fabrication d'un second film comprenant le dépôt sur une seconde couche support transparente (17) d'une cinquième couche transparente (16), la structuration de la cinquième couche sur l'ensemble de sa surface pour former le second réseau et le dépôt sur ladite cinquième couche structurée d'une quatrième couche (15),

- le dépôt sur l'un et/ou l'autre des deux films d'une troisième couche d'interface transparente ($14_A$, $14_B$), en contact avec la quatrième couche,

- l'assemblage des deux films au moyen de la ou desdites troisième(s) couche(s) d'interface,

les éléments d'identification (12), la ou les troisième(s) couche(s) (14) et la cinquième couche (16) ayant des indices de réfraction inférieurs aux indices de réfraction de la deuxième couche (13) et la quatrième couche (15), et

le premier réseau sub-longueur d'onde et le second réseau sub-longueur d'onde comportant une période et une orientation identiques.

10. Méthode de fabrication d'un composant optique de sécurité selon l'une quelconque des revendications 1 à 8, comprenant :

- La formation sur une première couche support transparente (11) d'éléments d'identification (12) obtenus par impression d'un matériau absorbant dans une partie au moins du spectre visible, pour reproduire des informations identifiables et la structuration d'une partie au moins desdits éléments pour former le premier réseau,
- le dépôt sur les éléments d'identification et la première couche support d'une deuxième couche (13),
- le dépôt d'une troisième couche (14) transparente, et la structuration de ladite troisième couche sur l'ensemble de sa surface pour former le second réseau,
- le dépôt sur la troisième couche structurée d'une quatrième couche (15),
- le dépôt sur la quatrième couche d'une cinquième couche (16),
les éléments d'identification (12), la troisième couche (14) et la cinquième couche (16) ayant des indices de réfraction inférieurs aux indices de réfraction de la deuxième couche (13) et la quatrième couche (15), et le premier réseau sub-longueur d'onde et le second réseau sub-longueur d'onde comportant une période et une orientation identiques.

11. Méthode de fabrication selon l'une des revendications 9 ou 10, comprenant le dépôt d'une couche réflective (18) sur la première couche support (11), préalablement à l'impression des éléments d'identification.

12. Méthode de fabrication selon la revendication 11, comprenant le retrait sélectif de la couche réflective pour former une couche réflective discontinue, les éléments d'identification formant un masque de démétallisation pour limiter le contact de la couche réflective aux seuls éléments d'identification.

**Patentansprüche**

1. Optische Sicherheitskomponente (10), dazu bestimmt, in einem spektralen Beobachtungsband zwischen 380 nm und 780 nm in direkter Reflexion beobachtet zu werden, bestehend aus einer Beobachtungsfläche (100) und identifizierbaren Informationen (22), wobei die besagte Komponente nacheinander ausgehend von der der Beobachtungsfläche gegenüberliegenden Seite Folgendes umfasst:

- eine erste Trägerschicht (11),
- Identifizierungselemente (12), erhalten durch Drucken eines absorbierenden Materials in mindestens einem Abschnitt des sichtbaren Spektrums, um mindestens einen Teil der besagten identifizierbaren Informationen zu reproduzieren, wobei mindestens ein Teil der Identifizierungselemente auf einer ihrer Flächen, die der der Trägerschicht zugewandten Fläche gegenüberliegt, strukturiert ist, um ein erstes Subwellenlängengitter zu bilden,
- eine zweite Schicht (13), die die erste Trägerschicht und die Identifizierungselemente bedeckt,
- eine dritte Schicht (14), die im spektralen Beobachtungsband der Komponente transparent ist, auf der besagten zweiten Schicht dergestalt aufliegt, dass das erste auf jedem Identifizierungselement gebildete Gitter in nullter Ordnung wie ein subtraktiver Filter in Wellenlängen agiert, wobei die dritte Schicht auf der gesamten, der zweiten Schicht gegenüberliegenden Fläche strukturiert ist, um ein zweites Subwellenlängengitter zu bilden,
- eine vierte Schicht (15), die auf der besagten strukturierten Fläche der dritten Schicht (14) aufliegt,
- eine fünfte Schicht (16), die im spektralen Beobachtungsband der Komponente transparent ist, auf der besagten vierten Schicht (15) dergestalt aufliegt, dass das zweite Gitter in nullter Ordnung wie ein subtraktiver Filter in Wellenlängen auf der gesamten Oberfläche der Komponente agiert,
wobei die Identifizierungselemente (12), die dritte Schicht (14) und die fünfte Schicht (16) Brechungsindizes haben, die niedriger als die Brechungsindizes der zweiten Schicht (13) und der vierten Schicht (15) sind, und das erste Subwellenlängengitter und das zweite Subwellenlängengitter eine Periode und eine Orientierung, die identisch sind, aufweisen.

2. Optische Sicherheitskomponente nach Anspruch 1, in welcher die Identifizierungselemente durch Drucken und Formen eines unter UV vernetzbaren Materials gebildet sind.

3. Optische Sicherheitskomponente nach einem der vorstehenden Ansprüche, in welcher mindestens ein erster Teil der Identifizierungselemente durch Drucken eines absorbierenden Materials von einer ersten Farbe und mindestens ein zweiter Teil der Identifizierungselemente durch Drucken eines absorbierenden Materials von einer zweiten Farbe gebildet sind.

4. Optische Sicherheitskomponente nach einem der vorstehenden Ansprüche, umfassend unter anderem eine reflektierende Schicht (18), die zwischen der Trägerschicht (11) und der zweiten Schicht (13) angeordnet ist.

**5.** Optische Sicherheitskomponente nach Anspruch 4, in welcher die reflektierende Schicht (18) diskontinuierlich ist, aufliegend auf der Trägerschicht und nur den Identifizierungselementen (12).

**6.** Optische Sicherheitskomponente nach Anspruch 4, in welcher die reflektierende Schicht (18) kontinuierlich ist, sich über die gesamte Trägerschicht erstreckend.

**7.** Optische Sicherheitskomponente nach einem der vorstehenden Ansprüche, umfassend unter anderem eine transparente Schutzschicht (17) auf der Seite der Beobachtungsfläche.

**8.** Optische Sicherheitskomponente nach Anspruch 7, geeignet für die Erzeugung eines Sicherheitsfadens.

**9.** Methode zur Herstellung einer optischen Sicherheitskomponente nach einem der vorstehenden Ansprüche, umfassend:

- die Herstellung eines ersten Films, umfassend den Druck auf einer transparenten ersten Trägerschicht (11) von Identifizierungselementen (12), die durch Drucken eines absorbierenden Materials in mindestens einem Abschnitt des sichtbaren Spektrums erhalten werden, um identifizierbare Informationen zu reproduzieren, die Strukturierung von mindestens einem Teil der Identifizierungselemente zur Bildung des ersten Gitters, und das Auftragen einer zweiten Schicht (13) auf den Identifizierungselementen und der ersten Trägerschicht

- die Herstellung eines zweiten Films, umfassend das Auftragen einer transparenten fünften Schicht (16) auf einer transparenten zweiten Trägerschicht (17), die Strukturierung der fünften Schicht auf der Gesamtheit ihrer Oberfläche zur Bildung des zweiten Gitters und das Auftragen einer vierten Schicht (15) auf der besagten strukturierten fünften Schicht,

- das Auftragen auf dem einen und/oder dem anderen der beiden Filme einer transparenten dritten Zwischenschicht ($14_A$, $14_B$), die auf der vierten Schicht aufliegt,

- die Verbindung der beiden Filme anhand der besagten dritten Zwischenschicht oder Zwischenschichten, wobei die Identifizierungselemente (12), die dritte oder die dritten Schicht(en) (14) und die fünfte Schicht (16) Brechungsindizes haben, die niedriger als die Brechungsindizes der zweiten Schicht (13) und der vierten Schicht (15) sind, und

das erste Subwellenlängengitter und das zweite Subwellenlängengitter eine Periode und eine Orientierung, die identisch sind, aufweisen.

**10.** Methode zur Herstellung einer optischen Sicherheitskomponente nach einem der vorstehenden Ansprüche 1 bis 8, umfassend:

- die Bildung auf einer transparenten ersten Trägerschicht (11) von Identifizierungselementen (12), die durch Drucken eines in mindestens einem Abschnitt des sichtbaren Spektrums absorbierenden Materials erhalten werden, um identifizierbare Informationen zu reproduzieren, und die Strukturierung mindestens eines Teils der besagten Elemente zur Bildung des ersten Gitters,

- das Auftragen einer zweiten Schicht (13) auf den Identifizierungselementen und der ersten Trägerschicht,

- das Auftragen einer transparenten dritten Schicht (14) und die Strukturierung der besagten dritten Schicht auf der Gesamtheit ihrer Oberfläche zur Bildung des zweiten Gitters,

- das Auftragen einer vierten Schicht (15) auf der strukturierten dritten Schicht,

- das Auftragen einer fünften Schicht (16) auf der vierten Schicht,

wobei die Identifizierungselemente (12), die dritte Schicht (14) und die fünfte Schicht (16) Brechungsindizes haben, die niedriger als die Brechungsindizes der zweiten Schicht (13) und der vierten Schicht (15) sind, und das erste Subwellenlängengitter und das zweite Subwellenlängengitter eine Periode und eine Orientierung, die identisch sind, aufweisen.

**11.** Herstellungsmethode nach einem der Ansprüche 9 oder 10, umfassend das Auftragen einer reflektierenden Schicht (18) auf der ersten Trägerschicht (11), vor dem Drucken der Identifizierungselemente.

**12.** Herstellungsmethode nach Anspruch 11, umfassend das selektive Entfernen der reflektierenden Schicht, um eine diskontinuierliche reflektierende Schicht zu bilden, wobei die Identifizierungselemente eine Entmetallisierungs-Maske bilden, um die Berührung der reflektierenden Schicht nur mit den Identifizierungselementen zu begrenzen.

**Claims**

1.  An optical security component (10) designed to be observed in a spectral observation band comprising of between 380 nm and 780 nm by direct reflection, comprising an observation face (100) and identifiable information (22), said component successively comprising, starting from the side opposite the observation face:

    - a first support layer (11);
    - identification elements (12) obtained by printing an absorbent material in at least part of the visible spectrum to reproduce at least part of said identifiable information, at least part of the identification elements being structured on one of their faces opposite the face across from the support layer, to form a first subwavelength grating,
    - a second layer (13) covering the first support layer and the identification elements,
    - a third layer (14) transparent in the observation spectral band of the component, in contact with said second layer such that the first grating formed on each identification element acts at order zero as a wavelength subtractive filter, said third layer being structured on all of its face opposite its face in contact with said second layer to form a second subwavelength grating,
    - a fourth layer (15) in contact with said structured face of the third layer (14),
    - a fifth layer (16) transparent in the spectral observation band of the component, in contact with said fourth layer (15), such that the second grating acts at the zero order as a wavelength subtractive filter over the entire surface of the component,

    wherein the identification elements (12), the third layer (14) and the fifth layer (16) have refractive indices lower than the refractive indices of the second layer (13) and the fourth layer (15), and
    the first subwavelength grating and the second subwavelength grating have the same period and the same orientation.

2.  The optical security component according to claim 1, wherein the identification elements are formed by printing and molding a UV cross-linkable material.

3.  The optical security component according to any one of the preceding claims, wherein at least a first part of the identification elements is formed by printing an absorbent material with a first color and at least a second part of the identification elements is formed by printing an absorbent material with a second color.

4.  The optical security component according to any one of the preceding claims, further comprising a reflective layer (18) arranged between the support layer (11) and the second layer (13).

5.  The optical component according to claim 4, wherein the reflective layer (18) is discontinuous, in contact with the support layer and the identification elements only (12).

6.  The optical component according to claim 4, wherein the reflective layer (18) is continuous, in contact with the entire support layer.

7.  The optical security component according to any one of the preceding claims, further comprising a transparent protective layer (17) on the side of the observation face.

8.  The optical security component according to claim 7, suitable for producing a security thread.

9.  A method for manufacturing an optical security component according to any one of the preceding claims, comprising:

    - manufacturing a first film comprising the formation, on a first transparent support layer (11), of identification elements (12) obtained by printing an absorbent material in at least part of the visible spectrum to reproduce identifiable information, structuring at least part of the identification elements to form the first grating, and depositing a second layer on the identification elements and the first support layer (13),
    - manufacturing a second film comprising the depositing, on a second transparent support layer (17), of a fifth transparent layer (16), structuring the fifth layer over its entire surface to form the second grating, and depositing a fourth layer on said fifth layer (15),
    - depositing, on one and/or the other of the two films, a third transparent interface layer ($14_A$, $14_B$) in contact with the fourth layer,

- assembling two films using said third interface layer(s),

wherein the identification elements (12), the third layer(s) (14) and the fifth layer (16) have refractive indices lower than the refractive indices of the second layer (13) and the fourth layer (15), and the first subwavelength grating and the second subwavelength grating have identical period and orientation.

10. A method for manufacturing an optical security component according to any one of claims 1 to 8, comprising:

- forming, on a first transparent support layer (11), identification elements (12) obtained by printing an absorbent material in at least part of the visible spectrum to reproduce identifiable information and structuring at least part of said elements to form the first grating,
- depositing a second layer (13) on the identification elements and the first support layer,
- depositing a third transparent layer (14), and structuring said third layer over its entire surface to form the second grating,
- depositing a fourth layer on the structured third layer (15),
- depositing a fifth layer (16) on the fourth layer,

wherein the identification elements (12), the third layer (14) and the fifth layer (16) have refractive indices lower than the refractive indices of the second layer (13) and the fourth layer (15), and

the first subwavelength grating and the second subwavelength grating have identical period and orientation.

11. The manufacturing method according to one of claims 9 or 10, comprising depositing a reflective layer (18) on the first support layer (11), before printing the identification elements.

12. The manufacturing method according to claim 11, comprising the selective removal of the reflective layer to form a discontinuous reflective layer, the identification elements forming a demetallization mask to limit the contact of the reflective layer with the identification elements only.

FIG.1

FIG.2

FIG.3

FIG.4

FIG.5

FIG.6

FIG.7A

FIG.7B

FIG.7C

FIG.7D

FIG.7E

FIG.7F

FIG.7G

FIG.8A

FIG.8B

FIG.8C

FIG.8D

FIG.8E

FIG.9A

FIG.9B

ART ANTERIEUR
FIG.10A

ART ANTERIEUR
FIG.10B

ART ANTERIEUR
FIG.10C

**RÉFÉRENCES CITÉES DANS LA DESCRIPTION**

**Documents brevets cités dans la description**

- FR 2838202
- FR 2509873
- WO 2006038120 A
- WO 2011104551 A
- WO 2004032257 A
- WO 03082598 A